# EUROPEAN PATENT SPECIFICATION

(11) **EP 3 871 853 B1**
(45) Date of publication and mention of the grant of the patent: **19.06.2024**
(21) Application number: 20206072.9
(22) Date of filing: 06.11.2020
(51) Int. Cl.: B29B 17/00, B29C 43/00, B29C 43/02, B29C 43/20, B29C 43/34

(54) **THERMOPRESSED COMPOSITE MATERIAL WITH POLYPROPYLENE WASTE MATRIX REINFORCED WITH TEXTILE WASTE WITH MULTIPLE FIBROUS COMPOSITION AS WELL AS METHOD AND DEVICE FOR PRODUCING THE SAME**
THERMOPRESSIERTES VERBUNDMATERIAL MIT POLYPROPYLEN-ABFALLMATRIX, VERSTÄRKT MIT TEXTILABFÄLLEN MIT MEHRFACHER FASERZUSAMMENSETZUNG SOWIE VERFAHREN UND VORRICHTUNG ZUR HERSTELLUNG DESSELBEN
MATÉRIAU COMPOSITE THERMODURCISSABLE AVEC MATRICE DE DÉCHETS DE POLYPROPYLÈNE RENFORCÉE DE DÉCHETS TEXTILES À COMPOSITION FIBREUSE MULTIPLE AINSI QUE LE PROCEDE ET LE DISPOSITIF POUR PRODUIRE LE MEME

(30) Priority: 26.02.2020 RO 202000100
(43) Date of publication of application: 01.09.2021
(73) Proprietor: Universitatea Tehnica "Gheorghe Asachi" Din Iasi, 700050 Iasi (RO)
(72) Inventor: AILENEI, Constantin-Eugen, Iasi (RO); HOBLEA, Alin-Enver, Iasi (RO)
(74) Representative: Fierascu, Cosmina-Catrinel

(56) References cited:
- DE-A1- 2 722 774
- US-A- 4 199 635
- US-A- 4 992 127
- US-A1- 2001 018 118
- US-A1- 2017 173 917
- US-B2- 9 469 089

## Description

### Field of invention

The invention relates to a thermopressed composite material comprising a PP matrix reinforced with at least one textile material with multiple fiber composition wherein the raw materials contain 100% waste of PP film and multiple fiber composition textile material. The invention also refers to a process of obtaining a thermopressed composite material and to a device used to obtain such material. The invention also refers to the uses of the thermopressed composite material in the field of building materials, for modular temporary construction works, decorative panels for interior fittings, items in the structure of upholstered furniture products, etc.

### State of the art

Document US2001/018118A1 discloses fiber-reinforced recycled thermoplastic composites and methods for their manufacture. In a preferred embodiment disclosed in this document, the thermoplastic composite incorporates a matrix of recycled thermoplastic and a plurality of high modulus fibers, with the recycled thermoplastic including polyethylene, polypropylene, nylon, PET and styrene-butadiene rubber, and the high modulus fibers including glass fibers, natural fibers, carbon fibers, and aramid fibers. A further prior art method is known from US 9 469 089 B2.

Textile waste recycling is an increasingly addressed concern, driven by the exponential increase in waste due to fast fashion, geographical trends, increasing consumption, and policies implemented at national and international level on waste management. Moreover, the approaches on the recycling of thermoplastic materials that are extremely difficult to degrade and neutralize have become increasingly important in the recent years. A documentary study found that the tandem of textile waste used as reinforcement material and the matrix of thermoplastic polymers is often encountered in the concerns of researchers.

Using these two raw materials, new materials can be obtained, with useful properties in various business sectors. At the same time, the possibility of using waste from various fields makes it possible to reduce unusable waste and limit the pollution generated by its neutralization.

In the literature, there are many examples of composite materials obtained by thermopressing polypropylene polymers and recovered fibers from different types of denim fabrics cut to 3-4 mm size, see [1] Haque, M., Sharif, A., Processing and Characterization of Waste Denim Fiber Reinforced Polymer Composites, International Journal of Innovative Science and Modern Engineering, 2014, 2 (6), 24-28;

Another example presented in the literature describes a thermo- and soundproofing composite material made from fibers resulting from the advanced dismantling processes of textile waste and polypropylene bicomponent fibers acting as binder, see document: [2] Zach, Jiří; Peterková, Jitka; Bubeník, Jan; Novák, Vítězslav; Zachova, Petra. Development of new advanced insulation materials from recycled textile, *Proceedings of the International Multidisciplinary Scientific GeoConference SGEM.* 2018, Vol. 18, p121-128. 8p;

The literature presents a composite material using three types of resins (epoxy, orthophthalic polyester and polyurethane) as a matrix reinforced with cotton waste strips cut to 2-3 cm size, see document [3] Zonatti, W. F. et al., Thermoset composites reinforced with recycled cotton textile residues, Textiles and Clothing Sustainability, 2015, vol.1, no. 1;

It is also presented a thermopressed composite material consisting of polypropylene and denim fabrics (76% cotton, 22% polyester, 2% elastane) recovered from waste, see document [4] Gómez-Gómez, J. F. et al., Scrap denim-PP composites as a material for new product design, IFDP'16 - Systems&Design: Beyond Processes and Thinking, 2016, pp. 819-828, as well as a composite material obtained by thermoforming at 185 -200°C from 100% cotton fibers recovered by waste disintegration, fiber residues from the spinning process mixed with polypropylene fibers in various proportions (70/30, 60/40 , 50/50), as presented in the document [5] Mishra, R., Behera, B., Militky, J., Recycling of Textile Waste into Green Composites: Performance Characterization, Polymer Composites, 2014, pp. 1960-1967.

The disadvantages of composite materials presented in the state of the art and in the literature are that recovered fibers are used by the intensive dismantling of the textile waste resulting from the pre- and post-consumption stages, resulting in a long value chain, higher costs, energy consumption and CO² emissions.

In this case, the preliminary processing of fabric waste first includes sorting by hand according to type of material, fiber composition, color, origin, degree of soiling, etc. followed, as appropriate, by dedusting, disinfection, washing-centrifugation-drying operations. These operations greatly complicate the process of producing composite material, with high or very high associated costs.

Further stripping, separating non-textile auxiliaries (buttons, zippers, buckles, hooves, etc.) and sorting by group of materials (base, linings, washes, etc.) are also required for waste fabric in the form of clothing. One of the most common processing operations is cutting, which is applied to reusable textile materials in order to reduce their size and to improve processing in fraying and defibration operations.

Another disadvantage is that the matrix requires polypropylene as recycled granules, see [1], virgin polypropylene bicomponent fibers see [2], resins see [3] involving release of formaldehyde, and virgin polypropylene fibers see [5]. The use of these materials may also generate/use toxic compounds for the production of composite material.

The use of fibers recovered from textile waste in the reinforcement component as well as of virgin polypropylene fibers as a binder implies high, unjustified costs for a composite material. These recovered fibers are generally used in vicuna wool spinning factories or in non-woven textile facilities.

**The purpose of the invention** is to provide a thermopressed composite material obtained from 100% PP film waste and multiple fiber fabric waste that will remove the drawbacks from the state of the art.

Another purpose of this invention is to provide a process of producing thermopressed composite material that is economically efficient, to remove sorting, dismantling, defiber of textile fabric and to prevent the production of toxic compounds/waste requiring costly neutralization operations.

Also, another purpose of this invention is to provide a device for obtaining a thermopressed composite material that is easy to use and efficient without high energy consumption.

Another aim of the invention is the use of the thermopressed composite material in various fields such as building materials, for modular temporary construction works, decorative panels for interior fittings, structural items for upholstered furniture products, etc.

**The purpose of the invention** is achieved by providing the thermopressed composite material made of 100% waste, using polypropylene (PP) film waste as a matrix and textile waste with multiple fiber compositions as reinforcement (armature). Another purpose of the invention is achieved by providing a process for obtaining thermopressed composite material, a device for obtaining it and the use of the obtained material in various fields such as, but not limited to, construction, furniture, interior fittings, modular provisional constructions, etc.

### Brief description of the invention

The invention additionally provides a procedure for obtaining a thermopressed composite material composed of 100% multiple fiber composition textile waste (Component 1) and PP waste (Component 2), wherein the PP waste (Component 2) forms a matrix which is reinforced with the multiple fiber composition textile waste (Component 1).

In addition, a device is provided to obtain a thermopressed composite material composed of 100% of textile waste with multiple fiber composition (Component 1) and PP waste (Component 2).

Finally, this invention discloses the use of the thermopressed composite material in the furniture, upholstery and construction sectors.

### Definitions

In order to avoid any confusion, the following terms and phrases will be defined for the purposes of this invention.

The term "waste" is used in this specification to define waste materials resulting from a technological process used to produce a particular product.

The waste materials which can no longer be directly recovered in the production of the product are called pre-consumption waste and the waste materials resulting from the use of the products is referred to as post-consumption waste.

The term "sandwich" refers to the overlapping of components on top of each other in alternative layers in a horizontal plane.

The term "woven fabric" means a textile product in which at least two distinct sets of yarn are braided to form a utility product in various forms of presentation, spatial or flat, e.g. canvas, fabric, etc. In the case of fabric, the yarns put along the length are named yarns for warp and the threads that run across the width from one side to the other are weft or filler threads.

The term "strip" means a narrow, long piece of fabric cut from a larger piece.

The term "patch" means a piece or small portion (in relation to the whole) cut from a piece of textile material.

The term "knife cutting machine" means a cutting machine that is specially designed for cutting textiles of all sizes. The textile material is placed on a feed belt driven by a system consisting of two drive cylinders, and is transported by it in front of the cutting unit. The cutting unit consists of two blades placed on the flywheel of the machine and a fixed counter blade placed on the machine frame, immediately after the fabric delivery cylinders. By turning the flywheel equipped with two knives and the counter blade, the waste is cut by the scissor-cutting effect that takes place at the interaction between the fixed blade and successively with the diametrically opposite blades placed on the flywheel in rotating motion.

The expression "Textile material with multiple fiber composition" refers to a material which contains yarns of different fibrous compositions in warp and weft and / or contains in both warp and weft a mixture of fibers mixed during the spinning process. The term reinforcer can also be used in this description, which refers to the textile material with multiple fiber composition.

The term "PP BOPP film" refers to the polypropylene (PP) film produced by melting polymer granules and extruding them in both the longitudinal and transverse directions. The orientation of the PP film is a physical process in which the polymeric molecular chains go through an orientation process, which allows the manufacturing of extremely thin films.

The expression "non-woven fabrics (TNT)" means a type of material made of synthetic fibers bound by mechanical or thermal processes. In the particular case presented, it is a material made of 100% polypropylene filaments reinforced by rolling.

The term "polyester" means a macromolecular product made from the combination of polyacids with unsaturated alcohols or glycols, used in the manufacture of synthetic fibers, plastics.

The term "elastane" is the generic name for synthetic polyurethane fibers, elastomers with linear macromolecules having at least 85% of weight in the chain, segmented polyurethane groups, highly elastic, which return the fibers to their original size after an elongation of at least 3 times of the initial length (usually a stretch and a return to the initial position of 400-700%).

The term "viscose" is an artificial chemical fiber obtained from regenerated cellulose, extracted from wood, reeds, straw, cotton linters, with properties similar to cotton fiber.

PP means polypropylene.

### Brief description of the drawing

The hereby invention will be further described by means of the accompanying drawing which is considered to be illustrative but is not intended to be limiting in any way.

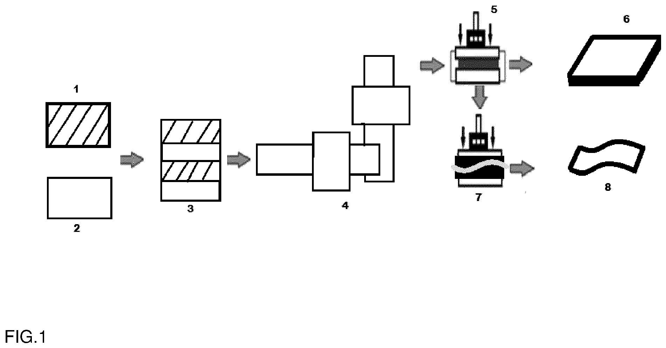

Figure 1 represents the manufacturing technological flow of the thermopressed composite material.

### Description of the invention

The invention will be described in more detail below.

In a first aspect, the invention provides a **thermopressed composite material** comprising a PP matrix reinforced with at least one textile material with multiple fiber composition **wherein** said PP matrix uses 100% PP foil waste (Component C2) with the thickness between 15 and 80 µm; and
said at least one textile material with multiple fiber composition uses 100% textile waste (Component C1) with a density ranging between 50 and 400 g / cm³,
**and wherein** the ratio between components C1 and C2 is in the range of 1:1 and 5:1, expressed in mass ratios relative to the total mass.

The thermopressed composite material subject to this invention has the advantage of not releasing toxic chemical emissions, being a 100% ecological material.

The PP matrix, unlike other types of resins used to obtain similar composite materials, is inert in terms of chemical releases even with up to 15 recycling cycles. Another advantage of this invention is the possibility of 100% recycling of materials at the end of the use cycle, and their recycling is beneficial because the neutralization step is no longer necessary, as it is an expensive process and harmful to the environment. Thus, the composite material described by the present invention manages to capitalize the textile waste that commonly ends up in landfills or incinerators, fact that has a significant ecological impact.

The thermopressed composite material of the invention has an extremely low manufacturing cost because the purchase prices of textile waste and PP foils used as raw material are low and, combined with the short and efficient manufacturing process of the material, results in a new product at a reasonable price with multiple applications in various fields.

Another advantage of the thermopressed composite material of the present invention is that it is 100% recyclable by grinding and it can be completely re-used in a new product. This feature is extremely important especially in the furniture industry where, after reaching the wear of a furniture product made of composite material according to the invention, for example, but not limited to, a chair, armchair, sofa, door, table, wardrobe, this product can be recycled very easily, at low costs, using a process according to the invention which is simple, efficient and without the release of toxic products.

The characteristics of the thermopressed composite material of this invention are similar to those of OSB and chipboard, and thus it can be used in the construction of houses, interior design or in the furniture industry. As wood, which is used in such applications, is an extremely precious material and difficult to regenerate, the material of the invention manages to replace it successfully, having many applications, but not limited to: walls for separating living spaces with large and medium areas, building of modular temporary constructions, decorative panels for interior design, items in the structure of upholstered furniture products and use as furniture products (chairs, tables, desks, ... etc.).

In a particularly preferred embodiment, the C1 to C2 ratio is preferably 1.5: 1 expressed in mass ratios relative to the total mass. If this ratio of components is used, the resulting composite material will have the mechanical characteristics comparable to wood-based composites (OSB, PAL), with hydrophobic properties, resistant to environmental factors (UV, water, insects) and to the action of chemicals, without toxic emissions, 100% recyclable and with the possibility of three-dimensional thermoforming.

An extremely important feature is that by varying the component C1 and component C2 ratios, we can obtain composite materials with direct influences on the product properties such as: hydrophobicity, bending strength, elastic modulus, breaking strength, coefficient of thermal conductivity (λ).

By varying these ratios, the following characteristics can be obtained:
- hydrophobicity, expressed in swelling in thickness after 24h immersion in water, the range of this characteristic varies from 2% (for thermopressed composite with a C1 :C2 ratio of 5:1) and 0% (for thermopressed composite with a C1 :C2 ratio of 1:1),
- the bending strength varies in the range from 20 N/mm2 (for heat-pressed composite material with a C1:C2 ratio of 5:1) and 35 N/mm2 (for heat-pressed composite material with a C1:C2 ratio of 1:1),
- the elasticity modulus varies in the range from 900 N/mm2 (for thermopressed composite material with a C1:C2 ratio of 5:1) and 1400 N/mm2 (for thermopressed composite material with a C1:C2 ratio of 1:1),
- the breaking strength varies in the range from 8 Mpa (for thermopressed composite material with a C1:C2 ratio of 5:1) and 23 Mpa (for thermopressed composite material with a C1:C2 ratio of 1:1),
- the coefficient of thermal conductivity varies in the range from 0.12 W/mk (for thermopressed composite material with a C1:C2 ratio of 5:1) and 0.22 W/mk (for thermopressed composite material with a ratio C1:C2 of 1:1))

In a particularly preferred embodiment, the thickness of the PP foil (Component 2) is preferably in the range of 20-35 µm.

Another important feature of the invention is the use of PP waste which is known to have a significant impact on the environment. PP waste is difficult to neutralize and generates high destruction costs. Thus, their use in the thermopressed composite material of the invention reduces the costs related to neutralization and reduces the release of toxic emissions.

In a particularly preferred embodiment, the density of the fibrous textile material is in the range of 60-150 g/cm 3. The advantage of using such a wide range of densities derives from the fact that these are found in most of the usual products used in the series production of garments, and sorting them into categories is not necessary. In addition, due to the lower density of the textile material with multiple fiber composition, the material is easier to manufacture by using lower compressive forces.

The textile waste with multiple fiber composition results from the technological manufacturing processes used to obtain various products, and they are currently reused in a maximum percentage of 60%. All categories of pre- and post-consumer textile waste (yarns, fabrics, knits, nonwovens, artificial leather, textile garments, etc.) can be used. Thus, one of the concerns in the field is to increase the reuse share as close as possible to 100%. However, the recovery of multi-fiber textile waste is mainly hampered by the fact that it incorporates variable percentages of polyester and cotton, which, due to the manufacturing process, makes it almost impossible to mechanically separate the components by simple processes.

Therefore, another advantage of the present invention is the possibility of using waste containing mixtures of polyester, cotton, viscose, polyurethane fibers, wool, without the use of advanced methods of fiber separation, intense fiber breakdown, manual sorting by size and composition, degree of wear and dirt, dusting and others. Moreover, another challenge in this field is the use of textile waste of different sizes and densities. In this regard, another important advantage of the present invention is the use of textile waste with multiple fiber composition (Component C1) of different sizes and densities. Textile waste without defibration or micronization (dimensions of about 1 mm) can be used. These are cut into strips/patches with dimensions between 1 cm² and 15 cm².

In another aspect of the present invention, there is provided a **process** for obtaining a thermopressed composite material composed of 100% textile waste with multiple fiber composition (Component 1) and PP foil waste (Component 2), wherein the PP waste (Component 2) forms a matrix that is reinforced with multi-fiber textile waste (Component 1), comprising the following successive steps:
a) the textile waste with multiple fiber composition (Component 1) and PP foil waste (Component 2) are placed on top of each other in a mixing bed (3), horizontally, in the form of a sandwich, in a ratio between the components C1 and C2 in the range of 1:1 to 5:1, preferably 1.5:1, expressed in mass relative to the total mass ratios;
b) the mixing bed (3) resulted in step a) is placed vertically and fed by the feed belt of the cutting unit (4), and cut (3) into multiple strips and/or patches by the cutting unit (4);
c) the mixture of materials resulted in step b) is heat pressed to obtain the thermopressed composite material.

One of the advantages of the process described by the invention is the fact that the recovery of textile waste is done simply and quickly only by cutting them, instead of their sorting and defibration, thus eliminating difficult and costly technological operations from an economic point of view.

Another advantage of the this process is that no chemical compounds are used, such as, but not limited to, resins, chemical adhesives - which are not chemically inert and which generate chemical compounds during the manufacturing process or during the lifetime of the finished product.

The manufacturing process presented in the invention is a short technological process, simple to perform, being particularly beneficial because the cutting and mixing are done simultaneously for the two categories of waste, i.e. for textile waste with multiple fiber composition (C1) and the PP waste in foil form (Component C2). Another advantage of this process is that it does not include the operation of waste sorting by categories, their micronization and/or defibration.

An additional advantage is also due to the way the mixture bed is formed (3) from the proposed components and the way they are cut into the cutting unit (4), which ensures the homogeneity of the mixture for thermopressing the composite material. In a preferred embodiment, the invention uses textile waste with multiple fiber composition (Component C1) with a density in the range of 50-400 g/cm3.

In another embodiment even more prefered, the invention uses textile waste with multiple fiber composition (Component C1) with a density in the range of 60-150 g/cm3.

If the density of the textile material with multiple fiber composition is in the range of 150-400 g/cm3, it is necessary to use a higher pressing force, and the resulting thermopressed composite material using such a Component C1 has a very good breaking strength.

In another embodiment of the invention, the multi-fiber textile waste (Component C1) is selected from: yarns, fabrics, knitwear, nonwovens, artificial leather, textile garments, characterized by multi-fiber composition with predominant polyester weight in mixture with natural and/or chemical fibers, mixed in various proportions.

In another particularly preferred embodiment, the fabrics comprise one or more of:
- 100% polyester, or
- 97% polyester fibers and 3% polyurethane fibers, or
- 67% polyester fibers and 33% cotton, or
- 55% polyester fibers and 45% wool.

In one embodiment, there are preferred fabrics with at least 50%, preferably between 50-80% polyester composition weight percentages relative to the total mass of the fabric.

The polyester fabrics are the most used in the textile industry but are not used in the recycling methods of the technical stage for the reasons mentioned above and they are finally sent to the landfill or incinerators.

When using fabrics comprising 100% polyester, or fabrics comprising 97% polyester fibers and 3% polyurethane fibers, a weather-resistant 100% composite material is obtained.

When using fabrics (Component C1) which comprise 67% polyester fibers and 33% cotton, or 55% polyester fibers and 45% wool, a composite material is obtained which ensures a very good interface of the PP matrix with the reinforcer (Component C1).

In a preferred embodiment, the fabric (Component C1) comprises:
- polyester in the range between 60-97%, preferably in the 82-88% range,
- viscose in the range between 0-30% preferably in the 16-25% range,
- elastane in the range of 1-12%, preferably in the 3-10% range,
- cotton in the range between 0-40%, preferably in the range 10-35% range, expressed as a mass percentage relative to the total mass of the fabric.

When using a fabric (Component C1) with the compositions according to the above percentages, we obtain a material which combines the hydrophobicity features with a very good interface of the PP matrix with the reinforcer.

In another embodiment of the invention, the PP foil waste (Component C2) has a thickness in the range of 15-80 µm.

In another particularly preferred embodiment, the thickness of the PP foil is in the range of 20-35 µm.

In a preferred embodiment, the PP waste (Component C2) is selected from 100% polypropylene and/or 100% bioriented polypropylene foil, nonwoven material (TNT) made from 100% polypropylene fibers reinforced by calendering or mixtures of them. In another embodiment, the heat press used in the process operates at a temperature in the range of 180-220°C and at a pressing force in the range of 6 -12.5 kgf/cm².

In a particularly preferred embodiment, the heat press used operates at 190°C and at a pressing force in the range of 8-10 kgf / cm².

By varying the temperature and the pressing force to which the mixture of C1 and C2 is subjected, materials with variable thickness and density can be obtained.

The composite material is cut immediately after thermopressing in the shape of flat plates (6) or three-dimensional products (8), depending on the destination;

Another advantage of the process relates to the fact that we can obtain flat plates (6) with a thickness in the range of 4-35 mm, more preferably in the range of 4-15 mm. They can be cut directly after the heat pressing to the required/necessary dimensions with the length in the range 2000-2800 mm, preferably in the range 2200-2600 mm, the width in the range 1500-2070 mm, preferably 1800-1900 mm. Because the properties of the thermo-pressed composite material obtained are similar to the classic wood-based composite materials (OSB, Pal), they can be used for temporary constructions or the manufacture of various upholstered furniture items.

Also, after or during the heat pressing, 3D items (8) can be obtained at the required/necessary dimensions and with a thickness in the range of 4-10 mm, preferably in the range of 5-8 mm.

This type of items are applicable especially in the furniture industry for the manufacture of various furniture items, or components thereof, such as, but not limited to, chairs, armchairs, sofas, cabinets, doors, tables, desks, etc.

In another aspect, the invention provides a device for obtaining thermopressed composite material composed of 100% textile waste with multiple fiber composition (Component 1) and PP foil waste (Component 2) which comprises the following elements:
(i) a surface for placing a bed of horizontal mixture (3) of textile waste with multiple fiber composition (Component 1) and PP foil waste (Component 2) on top of each other in the form of a sandwich where the ratio between components C1 and C2 is in the range of 1:1 to 5:1, preferably 1.5:1, expressed in mass relative to the total mass ratios;
(ii) a cutting unit (4), for cutting the material obtained in the mixing bed (3), comprising at least one cutting machine, preferably two cutting machines, placed perpendicular to each other in the cutting direction and on the surface of the mixing bed (3);
(iii) a heat press for melting the PP matrix (Component 2).

The textile waste with multiple fiber composition (Component 1) and the PP foil waste (Component 2) are placed on top of each other in the mixing bed (3), horizontally, in the form of a sandwich, in a ratio between components C1 and C2 in the range of 1:1 to 5:1, preferably 1.5:1, expressed in mass relative to the total mass ratios. The mixing bed (3) is taken over and fed on the feed belt of the cutting unit (4). In the first mixture cutting stage, in the first knife cutting machine of the cutting unit (4), the waste fed is cut in strips/patches perpendicular to the cutting direction of the knives of the first cutting machine, and then the waste is taken to the feed belt of the second cutting machine of the cutting unit (4) where the strips/patches are fed perpendicular to the cutting direction of the knives of this second cutting machine, and cut into patches/pieces with dimensions in the range of 1 cm² and 30 cm². Depending on the size of the mixing bed (3), one cutting passage or two cutting passages can be chosen. Also, depending on the speed of waste feeding in the cutting unit (4), the size of components C1 and C2 resulting from shredding/cutting can be varied considering that the waste is not sorted by size and the purpose is to cut it into small pieces.

In a particularly preferred embodiment, there is used a 2D plate heat press (5) or a 3D heat press (7).

In another aspect, the invention provides a **thermopressed composite material** comprising a 100% mixture of multi-fiber textile waste and polypropylene foil waste obtained by the process described herein.

In one embodiment, the thermopressed composite material is in the form of flat plates (6) with the length in the 2000-2800 mm range, the width in the 1500-2070 mm range and the thickness in the range of 4-35 mm which can be used in the construction of temporary constructions, partitions, cladding.

In another embodiment even more preferred, the thermopressed composite material is in the form of plates with a thickness in the range of 4-15 mm which can be used to manufacture various pieces of furniture.

In another embodiment, the composite material is in the form of 3D items (8) at the required/necessary dimensions and with a thickness in the range of 4-10 mm which can be used to obtain various pieces of furniture or components thereof, but without be limited to, chairs, armchairs, sofas, other furniture.

In another embodiment of the invention, the thermopressed composite material is in the form of 3D items (8) at the required/required dimensions and with a thickness in the range of 5-8 mm.

In a final aspect, it is describee the use of the thermopressed composite material of the invention in the furniture, upholstery industries and even in the construction of houses.

### Specific embodiments

The following are two embodiments that should not be considered limiting in any way. The composite material with polypropylene foil waste matrix reinforced with textile waste with multiple fiber composition is obtained according to the technological flow represented schematically in Figure 1.

In a preferred embodiment, the following categories of cotton-type fabrics with different fiber mixtures and the percentages of approximate participation in the total mass of the textile waste have been identified:
- 40% - 100% polyester fabrics,
- 20% - fabrics of 97% polyester and 3% elastane,
- 15% - fabrics of 88% polyester and 12% elastane,
- 15% - fabrics of 82% polyester, 16% viscose and 3% elastane,
- 10% - fabrics of 69% polyester, 30% viscose and 1% elastane.

In a preferred embodiment, the following types of waste were used as matrices: 100% polypropylene and/or 100% bioriented polypropylene foil, non-woven material made of 100% polypropylene fibers reinforced by calendering.

Two ratio mixtures of components were made: textile waste with multiple fiber composition (Component 1) and polypropylene waste from foil for bags - BOPP and/or nonwoven textile material - TNT (Component 2), respectively C1:C2 of 1:1 and 5:1.

The two components, the matrix C1 (consisting of PP film waste) and the reinforcing material C2 (textile material with multiple fiber composition) are placed in several alternative layers, horizontally, in the form of a sandwich in the mixing bed (3) with the purpose of improving the homogeneity of the mixture to be fed into the cutting unit (4).

In order to keep the alternative reinforcing/matrix structure in the mixing bed (3), the waste is taken up vertically and fed to the feed belt of the first cutting machine in the cutting unit (4) with the knives placed in perpendicular direction. The location of the two knife cutters is perpendicular to each other so that the direction of knife cut is on both axes of the fed mixing bed (3). In the first passage, the textile waste was cut into strips/patches, by an axial cut. In the second passage, the feeding of the strips/patches was made perpendicular to the cutting axis of the machine knives, in order to obtain the cutting on the opposite axis to the first passage, thus managing to cut the mixture into smaller strips/patches than the ones obtained in the first passage. Depending on the size of the waste used, one or both cutting machines may be used, as appropriate. Once the cutting operation is performed by the action of the knives but also by the matrix/reinforcement arrangement in the mixing bed 3, we mix and homogenize the components.

The factors that influence the cutting stage and the dimensions of the resulting strips/patches are:
- the size of the raw material fed which is characterized by the origin of the textile waste, respectively waste:
   - pre-consumption from the small and medium-sized cutting room, with sizes between 50 cm² and 1000 cm² that can turn to in 5÷15 cm wide strips/patches wide and with lengths up to 100 cm, in the case of non-woven material waste from the furniture industry or fabric edges;
   - pre-consumption non-woven fabrics/material/polypropylene foil (with quality defects, downgraded, morally worn), non-compliant products with large dimensions; coupons or pieces of fabrics/nonwovens/foils with widths between 100 ÷ 250 cm and lengths between 100 ÷ 500 cm.
   - post-consumption manufactured, discarded textile products collected from the population with large sizes.

Through this process we can control the cutting dimensions to the desired result. From the analysis on the size class, over 80% strips with dimensions in the range of 1-15cm² will be obtained.

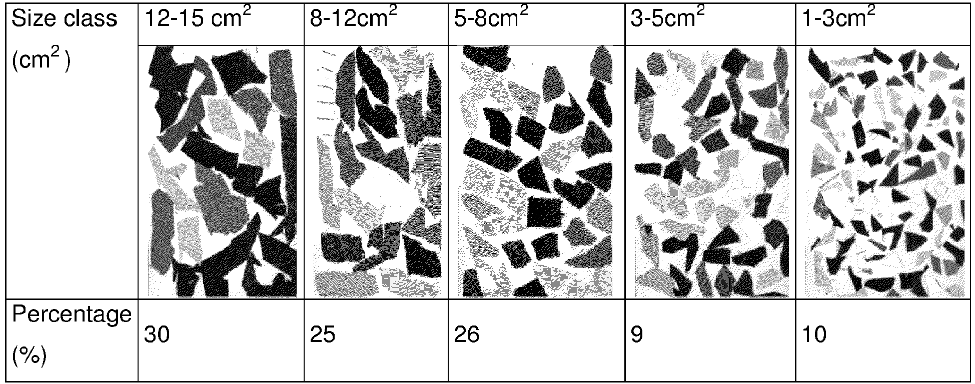

Thermopressing of mixtures with ratios between C1:C2 of 1:1 and 5:1 is carried out in a press with 2D platters (5) with temperature in the range of 180-220°C, preferably at 190°C in order to melt the polypropylene nonwoven matrix and/or bioriented polypropylene foil. The pressing force varies in the range of 6 - 12.5 kgf/cm², preferably in the range of 8-10 kgf/cm², depending on the destination of the composite material. The pressing has the role to ensure the homogeneous distribution and the infusion of the melted polypropylene polymer in the structure of the textile waste reinforcement in in order to achieve the mechanical connection between them after the matrix solidifies by cooling down.

In this case, flat plates (6) with thicknesses of 4-35 mm intended for the construction sector will result.

By transferring the composite material from the heat press (without using the cooling system) to the 3D mold press (7), three-dimensional 3D parts (8) are obtained, which are usually used in the furniture and upholstery industry.

In conclusion, the thermopressed composite material obtained according to the invention is a material obtained from 100% waste, which is easily manufactured using a simple process and device and eliminates the main disadvantages present in the state of the art.

In addition, it is a material that does not release toxic compounds and its manufacturing process eliminates the disadvantage of previous processing such as defibration, disintegration, waste sorting, etc. and has many applications in the furniture industry, construction, temporary modular constructions.

## Claims

1. A process for obtaining a thermopressed composite material composed of 100% textile waste with multiple fiber composition (1) and PP foil waste (2) wherein the PP waste forms a matrix which is reinforced with textile waste with multiple fiber composition (1) which comprises the following successive steps:
a) the horizontal placement of textile waste with multiple fiber composition (1) and PP foil waste (2) on top of each other, in the form of a sandwich, in a ratio between components C1 and C2 within the range of 1:1 to 5:1, preferably 1.5:1, expressed in mass ratios relative to the total mass, in a mixing bed (3), and wherein C1 is said textile waste and C2 is said PP foil waste
b) taking the mixing bed (3) resulting in step a) vertically and cutting it into multiple strips and/or patches by means of a cutting unit (4);
c) heat pressing of the cut material resulting in step b)to obtain the thermopressed composite material.

2. Process according to Claim 1 wherein the textile waste with multiple fiber composition (1) has a density in the range of 50-400g/cm³ preferably 60-150g/cm³ and PP foil waste (2) has a thickness in the range of 15-80µm.

3. Process according to Claim 1 or Claim 2 wherein the heat press (5,7) operates at a temperature in the range of 180-220°C, preferably at 190°C and at a pressing force in the range of 6-12.5kgf/cm², preferably in the range of 8-10 kgf/cm².

4. Process according to any of the preceding claims, wherein the textile waste with multiple fiber composition (1) is selected from yarns, fabrics, knits, non-woven materials, artificial leather, textile garments, **characterized by** a multiple fiber composition with the weight of at least 50% polyester mixed with natural and/or chemical fibers, in various percentage mix.

5. Process according to any of the preceding claims, wherein the textile waste with multiple fiber composition (1) comprises one or more of the following:
- 100% polyester, or
- 97% polyester fibers and 3% polyurethane fibers or,
- 67% polyester fibers and 33% cotton or
- 55% polyester fibers and 45% wool.

6. Process according to any of the preceding claims, wherein the textile waste with a multiple fiber composition (1) has a polyester content in the range of 50-80%.

7. Process according to any of the preceding claims, wherein the textile waste with multiple fiber composition (1) comprises:
- polyester in the range of 60-97%, preferably in the range of 82-88% and
- viscose in the range of 0-30%, preferably in the range of 16-25%, and
- elastane in the range of 1-12%, preferably in the range of 3-10%, and
- cotton in the range of 0-40%, preferably in the range of 10-35% expressed as a mass percentage relative to the total mass of the fabric.

8. Process according to any of the preceding claims wherein the PP waste (2) is selected from 100% polypropylene foil and/or 100% bioriented polypropylene, a nonwoven material made of 100% polypropylene fibers reinforced by calendering or mixtures thereof.

9. A device for obtaining a thermopressed composite material composed of 100% textile waste with multiple fiber composition (1) and PP foil waste (2) wherein the PP waste forms a matrix which is reinforced with textile waste with multiple fiber composition (1) which comprises the following elements:
(i) an area containing a horizontal placement of a mixing bed (3) of multi-fiber textile waste (1) and PP foil waste (2), one on top of the other in the form of a sandwich, where the ratio between components C1 and C2 is in the range of 1:1 to 5:1, preferably 1.5:1, expressed in mass ratios relative to the total mass, wherein C1 is said textile waste and C2 is said PP foil waste;
(ii) a cutting unit (4) for cutting the material obtained in the mixing bed (3) comprising at least one cutting machine, preferably two cutting machines, placed perpendicular to each other in the cutting direction and on the surface of the mixing bed (3);
(iii) a heat press for melting the PP matrix (2).

10. Use of a thermopressed composite material comprising the steps of
- providing, by a method according to one of the claims 1 to 8, a composite material comprising a PP matrix reinforced with at least one textile material with multiple fiber composition wherein said PP matrix uses 100% PP foil waste (2) with a thickness in the range of 15-80 µm, preferably in the range of 20-35 µm; and said at least one textile material with multiple fiber composition (2) uses 100% textile waste with a density in the range of 50-400 g/cm³, preferably 60-150 g/cm³, wherein the ratio between components C1 and C2 is in the range of 1:1 and 5:1, preferably 1.5:1, expressed in mass ratios relative to the total mass - using said composite material in the furniture, upholstery or house construction industries.

## Patentansprüche

1. Verfahren zur Herstellung eines thermogepressten Zusammengesetzte Materials, das zu 100% aus Textilabfällen mit Mehrfachfaserzusammensetzung (1) und PP-Folienabfällen (2) besteht, wobei die PP-Abfälle eine Matrix bilden, die mit Textilabfällen mit Mehrfachfaserzusammensetzung (1) verstärkt wird, welches die folgenden sukzessive Schritte umfasst:
a) das horizontale Anordung von Textilabfällen mit Mehrfachfaserzusammensetzung (1) und PP-Folienabfällen (2), eins über dem anderen, in Form eines Sandwiches, im Verhältnis zwischen den Komponenten C1 und C2 im Bereich von 1:1 bis 5 :1, vorzugsweise 1,5:1, ausgedrückt als Massenverhältnissen relativ zur Gesamtmasse, in einem Mischbett (3), und wobei C1 der Textilabfälle und C2 der PP-Folienabfälle ist;
b) Vertikales Nehmen des Mischbetts (3) aus Schritt a) hergestellt wurde und Schneiden in mehrere Streifen und/oder Flicken mittels einer Schneideinheit (4);
c) Heißpressen des in Schritt b) geschnittenen Materials hergestellt wurde, zur Herstellung des thermogepresste Zusammengesetzte Materials.

2. Verfahren nach Anspruch 1, wobei der Textilabfällen mit Mehrfachfaserzusammensetzung (1) eine Dichte im Bereich von 50-400 g/cm³, vorzugsweise 60-150 g/cm³ aufweist und PP-Folienabfälle (2) eine Dicke im Bereich von 15-18 µm aufweist.

3. Verfahren nach Anspruch 1 oder Anspruch 2, wobei die Heißpresse (5,7) bei einer Temperatur im Bereich von 180-220°C, vorzugsweise bei 190°C, und mit einer Presskraft im Bereich von 6-12,5 kgf/cm², vorzugsweise im Bereich von 8-10 kgf/cm² arbeitet.

4. Verfahren nach einem der vorhergehenden Ansprüche, wobei der Textilabfälle mit Mehrfachfaserzusammensetzung (1) ausgewählt aus Garnen, Stoffen, Gewirken, Vliesstoffen, Kunstleder, Textilbekleidung wird, **dadurch gekennzeichnet, dass** eine Mehrfachfaserzusammensetzung mit dem Gewicht von mindestens 50% Polyester, gemischt mit Natur- und/oder Chemiefasern, in verschiedenen Mischungsprozentsätzen.

5. Verfahren nach einem der vorhergehenden Ansprüche, wobei der Textilabfälle mit Mehrfachfaserzusammensetzung (1) einen oder mehrere der folgenden Stoffe umfasst:
- 100% Polyester, oder
- 97% Polyesterfaser und 3% Polyurethanfaser oder,
- 67% Polyesterfaser und 33% Baumwolle oder
- 55% Polyesterfaser und 45% Woole.

6. Verfahren nach einem der vorhergehenden Ansprüche, wobei der Textilabfälle mit einer Mehrfaserzusammensetzung (1) einen Polyestergehalt im Bereich von 50-80 % aufweist.

7. Verfahren nach einem der vorhergehenden Ansprüche, wobei der Textilabfälle eine Mehrfachfaserzusammensetzung (1) umfasst:
- Polyester im Bereich von 60-97%, vorzugsweise im Bereich von 82-88% und
- Viskose im Bereich von 0-30%, vorzugsweise im Bereich von 16-25%, and
- Elasthan im Bereich von 1-12%, vorzugsweise im Bereich von 3-10%, and
- Baumwolle im Bereich von 0-40%, vorzugsweise im Bereich von 10-35%
ausgedrückt als Massenprozentsatz relativ zur Gesamtmasse des Stoffes.

8. Verfahren nach einem der vorhergehenden Ansprüche, wobei der PP- Abfälle (2) ausgewählt aus 100% Polypropylenfolie und/oder 100% biorientiertem Polypropylen, einem Vliesmaterial aus 100% durch Kalandrieren verstärkten Polypropylenfasern wird oder Mischungen davon.

9. Vorrichtung zur Herstellung von thermogepresstem Zusammengesetzte Materials, das zu 100% aus mehrfaserigen Textilabfällen (1) und PP-Abfällen (2) besteht, wobei die PP-Abfälle eine Matrix bilden, die mit Textilabfällen mit Mehrfachfaserzusammensetzung (1) verstärkt wird, die die folgenden Elemente umfasst:
(i) ein Bereich, der die horizontale Anordung eines Mischbetts (3) aus mehrfaserigen Textilabfällen (1) und PP-Folienabfällen (2), eins über dem anderen, in Form eines Sandwichs enthält, wobei das Verhältnis zwischen den Komponenten C1 und C2 liegt im Bereich von 1:1 bis 5:1, vorzugsweise 1,5:1, ausgedrückt in Massenverhältnissen relativ zur Gesamtmasse, wobei C1 der Textilabfälle und C2 der PP-Folienabfälle ist;
(ii) eine Schneideinheit (4) zum Schneiden des im Mischbett (3) erhaltenen Materials, umfassend mindestens eine Schneidmaschine, vorzugsweise zwei Schneidmaschinen, die senkrecht zueinander in Schneidrichtung und auf der Oberfläche des Mischbetts (3) angeordnet sind;
(iii) eine Heißpresse zum Aufschmelzen der PP-Matrix (2).

10. Verwendung des thermogepressten Zusammengesetzte Materials, umfassend den Schritt:
- Bereitstellen, durch ein Verfahren nach einem der Ansprüche 1 bis 8, eines Zusammengesetzte Materials, das eine PP-Matrix umfasst, die mit mindestens einem textilen Material mit Mehrfachfaserzusammensetzung verstärkt ist, wobei die PP-Matrix 100 % PP-Folienabfälle (2) mit einer Dicke von 1,5 mm verwendet im Bereich von 15-80 µm, vorzugsweise im Bereich von 20-35 µm; und das mindestens eine Textilmaterial mit Mehrfachfaserzusammensetzung (1) 100 % Textilabfälle mit einer Dichte im Bereich von 50-400 g/cm³, vorzugsweise 60-150 g/cm³, verwendet, wobei das Verhältnis zwischen den Komponenten C1 und C2 beträgt im Bereich von 1:1 und 5:1, vorzugsweise 1,5:1, ausgedrückt in Massenverhältnissen zur Gesamtmasse der Polster- oder Hausbauindustrie.

## Revendications

1. Procédé de produire un matériau composite thermodurcissable composé de déchets textiles 100% à composition fibreuse multiple (1) et déchets de feuilles PP (2)
dans lequel les déchets PP forment une matrice qui est renforcée de déchets textiles à composition fibreuse multiple (1)
qui comporte les étapes successives suivantes:
a) le placement horizontal des déchets textiles à composition fibreuse multiple (1) et des déchets de feuilles PP (2) les uns sur les autres, sous la forme d'un sandwich, dans un rapport entre les composants C1 et C2 dans la plage de 1:1 à 5:1, exprimé en rapport de masse par rapport à la masse totale dans un lit de mélange (3), et dans lequel C1 sont lesdits déchets textiles et C2 sont lesdits déchets de feuilles PP;
b) prendre le lit de mélange (3) obtenu dans l'étape a) verticalement et le couper en bandes multiple et/ou en patches au moyen d'une unité de découpe (4);
c) presser à chaud le matériau découpé résultant dans l'étape b) pour produire le matériau composite thermodurcissable.

2. Procédé selon la revendication 1 dans lequel les déchets textiles à composition fibreuse multiple (1) présentent une densité dans la plage de 50-400 g/cm³, de préférence 60-150 g/cm³ et les déchets de feuilles PP (2) présentent une épaisseur dans la plage de 15-80 µm.

3. Procédé selon la revendication 1 ou la revendication 2 dans lequel la presse à chaud (5, 7) fonctionne à une température dans la plage de 180-220°C, de préférence à 190°C et à une pression dans la plage de 6-12 kgf/cm³, de préférence dans la plage de 8-10 kgf/cm³.

4. Procédé selon l'une quelconque des revendications précédentes, dans lequel les déchets textiles à composition fibreuse multiple (1) sont choisis parmi les fils, les tissus, les tricots, les matériaux non-tissés, le cuir artificiel, les vêtements textiles, **caractérisés par** une composition fibreuse multiple avec le poids d'au moins 50% polyester mélangé avec des fibres naturelles et/ou chimiques, dans des mélanges à différents pourcentages.

5. Procédé selon l'une quelconque des revendications précédentes, dans lequel les déchets textiles à composition fibreuse multiple (1) comportent un ou plusieurs des suivants :
- 100% polyester, ou
- 97% fibres de polyester et 33% fibres de polyuréthane ou,
- 67% fibres de polyester et 33 % coton ou
- 55% fibres de polyester et 45% laine.

6. Procédé selon l'une quelconque des revendications précédentes, dans lequel les déchets textiles à composition fibreuse multiple (1) comportent un teneur en polyester dans la plage de 50-80%.

7. Procédé selon l'une quelconque des revendications précédentes, dans lequel les déchets textiles à composition fibreuse multiple (1) comportent :
- polyester dans la plage de 90-97%, de préférence dans la plage de 82-88%, et
- viscose dans la plage de 0-30%, de préférence dans la plage de 16-25%, et
- elastane dans la plage de 1-12%, de préférence dans la plage de 10-35%
- coton dans la plage de 0-40%, de préférence dans la plage de 10-35%
exprimés en pourcentages massiques par rapport à la masse totale du tissu.

8. Procédé selon l'une quelconque des revendications précédentes, dans lequel les déchets PP (2) sont choisis parmi la feuille de polypropylène 100% et/ou polypropylène biorienté, un matériau non-tissé composé de fibres de polypropylène 100% renforcées par calandrage ou leurs mélanges.

9. Dispositif pour obtenir un matériau composite thermodurcissable composé de 100% déchets textiles à composition fibreuse multiple (1) et déchets de feuilles PP (2)
dans lequel les déchets PP forment une matrice qui est renforcée de déchets textiles à composition fibreuse multiple (1)
qui comprend les éléments suivants:
(i) une zone comportant un placement horizontal d'un lit de mélange (3) composé de déchets textiles à composition fibreuse multiple (1) et déchets de feuilles PP (2), les uns sur les autres, sous la forme d'un sandwich, dans un rapport entre les composants C1 et C2 dans la plage de 1:1 à 5:1, de préférence 1,5 :1, exprimé en rapports de masse par rapport à la masse totale, dans lequel C1 sont lesdits déchets textiles et C2 sont lesdits déchets de feuilles PP;
(ii) une unité de découpe pour découper le matériau obtenu dans le lit de mélange (3) comportant au moins un dispositif de découpe, de préférence deux dispositifs de découpe placés perpendiculairement l'un à l'autre dans la direction du découpe et sur la surface du lit de mélange (3);
(iii) une presse à chaud pour fondre la matrice PP (2).

10. Utilisation d'un matériau composite thermodurcissable comportant les étapes de
- fourniture, par une méthode selon l'une des revendications 1 à 8, un matériau composite comprenant une matrice PP renforcée avec au moins un matériau textile à composition fibreuse multiple dans lequel ladite matrice PP utilise des déchets de feuilles PP 100% (2) avec une épaisseur dans la plage de 15-80 µm, de préférence dans la plage de 20-35 µm ; et au moins ledit matériau textile à composition fibreuse multiple (2) utilise des déchets textiles 100% avec une densité dans la plage de 50-400 g/cm³, de préférence 60-150 g/cm³, où le rapport entre les composants C1 et C2 est dans la plage de 1 :1 à 5 :1, de préférence 1,5 :1, exprimé en rapports de masse par rapport à la masse totale en utilisant ledit matériau composite aux meubles, aux tapisseries ou dans l'industrie de la construction de maisons.
